(19) **Europäisches Patentamt**

**European Patent Office**

**Office européen des brevets**

(11) **EP 1 230 168 B1**

(12) **FASCICULE DE BREVET EUROPEEN**

(45) Date de publication et mention
de la délivrance du brevet:
**02.08.2006 Bulletin 2006/31**

(21) Numéro de dépôt: **00969626.1**

(22) Date de dépôt: **13.10.2000**

(51) Int Cl.:
*C02F 1/04* (2006.01)          *B01D 5/00* (2006.01)
*B01D 3/38* (2006.01)          *C02F 103/06* (2006.01)

(86) Numéro de dépôt international:
**PCT/FR2000/002875**

(87) Numéro de publication internationale:
**WO 2001/028932 (26.04.2001 Gazette 2001/17)**

(54) **PROCEDE ET DISPOSITIF DE TRAITEMENT DES LIXIVIATS PRODUITS PAR LE STOCKAGE DES DECHETS**

VERFAHREN UND VORRICHTUNG ZUR BEHANDLUNG VON SICKERWÄSSERN

METHOD AND DEVICE FOR TREATING LEACHATES PRODUCED BY STORAGE OF WASTE

(84) Etats contractants désignés:
**AT BE CH CY DE DK ES FI FR GB GR IE IT LI LU MC NL PT SE**

(30) Priorité: **15.10.1999 FR 9913105**

(43) Date de publication de la demande:
**14.08.2002 Bulletin 2002/33**

(73) Titulaires:
• **SITA FD S.A.**
**92000 Nanterre (FR)**
• **France EVAPORATION**
**59000 Lille (FR)**

(72) Inventeurs:
• **VEAUVY, Christian**
**F-75116 Paris (FR)**

• **DEHAY, Alain**
**F-59840 Lompret (FR)**

(74) Mandataire: **Hennion, Jean-Claude**
**Cabinet Beau de Loménie,**
**27bis, rue du Vieux Faubourg**
**59800 Lille (FR)**

(56) Documents cités:
**EP-A- 0 094 547**          **EP-A- 0 176 963**
**EP-A- 0 546 268**          **DE-A- 19 648 372**
**FR-A- 2 770 211**

• **LEONHARD K: "EINDAMPFUNG VON DEPONIESICKERWASSER" GWF WASSER ABWASSER,DE,OLDENBOURG VERLAG. MUNCHEN, vol. 131, no. 9, 1 septembre 1990 (1990-09-01), pages 467-471, XP000173668 ISSN: 0016-3651**

**EP 1 230 168 B1**

## Description

L'invention se rapporte à un procédé de traitement des lixiviats produits par le stockage des déchets contenant des matières minérales et organiques.

Elle se rapporte également aux moyens pour la mise en oeuvre du procédé.

Les zones de stockage des déchets sont réglementées et notamment ces zones de stockage sont, avant toute dépose de déchets recouverte d'un film imperméable et d'un réseau de drainage destiné à récupérer l'eau de pluie qui traversera, ultérieurement, les différentes couches de déchets accumulés au cours du temps de fonctionnement de cette décharge.

Cette eau de pluie, en traversant les déchets, se charge en matière et ne peut être rejetée dans la nature sans subir un traitement dépolluant.

Il existe de nombreuses techniques de dépollution.

Le document DE-A-19648372 décrit un procédé d'évaporation sous vide de lixiviats produits par les stockages de déchets. L'évaporation sous vide présente de nombreux inconvénients. La formation de mousse est importante et nécessite l'usage de produits chimiques antimousse. Pour limiter l'ébullition, il est par ailleurs nécessaire, comme décrit dans le document DE-A-19648372, de prévoir une séparation des matières rentrant facilement en ébullition.

Le document EP-A-0176963 décrit un procédé de traitement des lixiviats par distillation acide ou alcaline, ces lixiviats contenant des composés polychlorés ou aromatiques et d'autres composés cycliques organiques. Le réglage du pH implique des quantités importantes d'acides ou de bases, ce qui est à la fois coûteux et dangereux. La distillation décrite dans le document EP-A-0176963 est effectuée à 125°Celsius, sous pression atmosphérique, pendant un temps très long. Il en résulte une dégradation des polluants thermo-sensibles.

Le document EP-A-0094547 décrit un procédé de traitement des lixiviats comprenant une première étape de chauffage à 170°Celsius, suivie d'une surchauffe des vapeurs à 800°Celsius. Ces températures de travail s'avèrent inadaptées au traitement des polluants thermo-sensibles.

On connaît par ailleurs les traitements biologiques qui consistent à traiter la pollution avec des bactéries.

On connaît également des traitements utilisant des membranes ou encore les traitements physico-chimiques.

Existe également un procédé de concentration par évaporation à l'air précédé d'un pré-traitement, tel un traitement biologique ou chimique ou encore un procédé de séparation des gaz ou solvants à l'aide d'air appelé couramment « stripping » à l'air.

Un volume d'air important permet ce dégazage à l'air mais, malheureusement, il entraîne dans l'atmosphère les polluants volatils ce qui ne constitue pas réellement une dépollution, le but de la dépollution étant bien évidemment soit d'éliminer celle-ci, soit de la concentrer pour la stocker de manière contrôlée.

Compte tenu du volume d'air utilisé nécessairement dans ce procédé pour entraîner les polluants, il n'est pas possible d'incinérer ces polluants volatiles.

Ce dernier procédé par pré-traitement et concentration est peu performant car, notamment, le dispositif de concentration s'encrasse rapidement et doit être nettoyé environ tous les deux semaines.

Un des résultats que l'invention vise à obtenir est un procédé de traitement des lixiviats contenant des matières minérales et organiques comprenant au moins une étape de concentration des polluants par évaporation, ce procédé étant caractérisé en ce que :

- on introduit les lixiviats à traiter dans un dispositif de concentration par évaporation pour leur faire subir un traitement de concentration par évaporation pendant un temps court, compris entre cinq et cent minutes, à une température inférieure à 110°Celsius, afin :

  • d'une part, de concentrer les polluants non volatils et,
  • d'autre part, de préserver les polluants thermo-sensibles,

- après condensation des vapeurs produites par le dispositif de concentration par évaporation, on introduit les condensats dans un dispositif de séparation des gaz et/ou solvants où l'on sépare, à l'aide de vapeur, les gaz et/ou solvants contenus dans les condensats et
- on incinère les dits gaz et/ou solvants.

L'invention concerne également les moyens pour la mise en oeuvre du procédé.

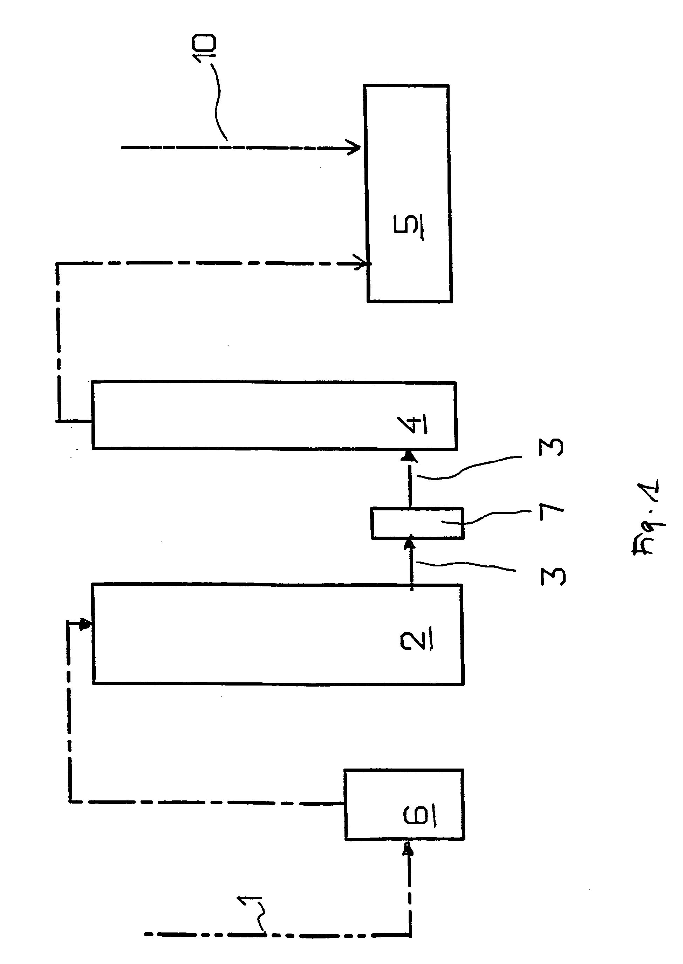

L'invention sera bien comprise à l'aide de la description ci-après faite à titre d'exemple non limitatif et en regard du dessin qui représente schématiquement une installation pour le traitement des lixiviats.

En se reportant au dessin, on voit que pour traiter des lixiviats 1 de décharge, c'est à dire de l'eau contenant des matières minérales et organiques, on utilise un procédé de traitement mettant en oeuvre une étape de concentration par évaporation.

Selon une caractéristique de l'invention :

- on introduit les lixiviats 1 à traiter dans un dispositif 2 de concentration par évaporation pour leur faire subir un traitement de concentration par évaporation pendant un temps court, compris entre cinq et cent minutes, à une température inférieure à 110°Celsius, afin :

  • d'une part, de concentrer les polluants non volatils et,

• d'autre part, préserver les polluants thermo-sensibles,

- après condensation des vapeurs produites par le dispositif 2 de concentration par évaporation, on introduit les condensats 3 dans un dispositif 4 de séparation des gaz et/ou solvants où l'on sépare, à l'aide de vapeur, les gaz et/ou solvants contenus dans les condensats et
- on incinère les dits gaz et/ou solvants.

Le temps dans le dispositif de concentration sera, de préférence, choisi entre dix et trente minutes.

La température de traitement sera, de préférence, de l'ordre de 80°Celsius.

On incinère les gaz et/ou solvants par combustion dans une chaudière 5 et, avantageusement, pour les lixiviats de décharge, on alimente la chaudière avec le gaz-carburant 10 produit par les déchets de la décharge.

Cette solution est très intéressante car elle permet à la fois de traiter la pollution et d'éliminer le gaz provenant de la décomposition des déchets.

Les gains économiques sont importants.

On peut éventuellement incinérer les gaz et/ou solvants par catalyse.

Le temps de traitement, dans le dispositif de concentration doit, de préférence, être le plus court possible pour éviter que les matières organiques se dégradent pour former d'autres polluants.

Il est important d'obtenir un échange de chaleur important dans un temps très court.

Dans une forme d'exploitation, avant leur introduction dans le dispositif de concentration par évaporation, on réchauffe les lixiviats.

Les moyens pour la mise en oeuvre de l'invention comprennent :

- un dispositif 2 de concentration par évaporation choisi parmi les dispositifs de concentration par évaporation dit à flot tombant et les dispositifs d'évaporation du type à évaporation forcée, avec un cycle de traitement court compris entre cinq et cent minutes, à une température inférieure à 110°Celsius,
- un dispositif 4 de séparation des gaz et/ou solvants au moyen de vapeur et
- un moyen d'incinération 5.

on utilise un dispositif de concentration par évaporation dit à flot tombant.

Il s'agit d'une chambre logeant un faisceau de tubes verticaux à l'intérieur desquels tubes on fait circuler l'effluent à concentrer, ces tubes étant extérieurement chauffés à l'aide de vapeur.

L'effet de gravité conjugué à l'aspiration des buées qui formeront ultérieurement les condensats crée une forte turbulence dans les tubes, ce qui améliore le coefficient d'échange et évite également l'encrassement.

On peut également utiliser un dispositif d'évaporation du type à évaporation forcée.

Il est moins performant que celui à flot tombant car le temps de traitement ou temps de séjour est plus long et donc on décompose la matière organique thermosensible mais cela peut fonctionner si l'on accepte un minimum de rejet.

Cependant, les moyens de mise en oeuvre comprendront en outre :

- éventuellement, un moyen 6 de préchauffage des lixiviats avant introduction dans le dispositif 2 de concentration par évaporation,
- un dispositif 7 de condensation situé en amont du dispositif 4 de séparation des gaz et/ou solvants et en aval du dispositif de concentration.

Le temps de traitement ou séjour est défini selon la formule :

$$T = \frac{\sum V_i \times m_i}{D_o \times M_o}$$

T = temps de séjour de la matière sèche en secondes,

$\sum V_i \times m_i$ = somme des produits des volumes morts en litre dans les différents étages de concentration par la concentration en matières sèches en gramme/litre,

$D_o$ = Débit à l'entrée en litre/seconde,

$M_o$ = Matières sèches à l'entrée en gramme/litre.

La matière sèche est déterminée à 105 degré Celsius.

Une autre manière de déterminer le temps de séjour consiste à mesurer le pourcentage de perte de la thiamine après passage dans le dispositif de concentration dans les mêmes conditions de débit et de température.

Avec la formule :

$$L\% = 100 - (100/(1 + kt))$$

$k = 10^{[(-102,000/(2.3 \times 8.314) \times (1/T°)) + 10.08]}$

T° = Température Kelvin

Avantageusement, la chaudière pour l'incinération produit de la vapeur pour le dispositif d'évaporation.

Celle-ci pourra être remplacée par un dispositif de compression mécanique.

L'incinération est réalisée à une température supérieure à 900°Celsius.

## Revendications

**1.** Procédé de traitement des lixiviats produits par le stockage des déchets contenant des matières minérales et organiques mettant en oeuvre une étape de concentration par évaporation,
ce procédé étant **CARACTERISE en ce que** :

> - on introduit les lixiviats (1) à traiter dans un dispositif (2) de concentration par évaporation pour leur faire subir un traitement de concentration par évaporation pendant un temps court, compris entre cinq et cent minutes, à une température inférieure à 110°Celsius, afin :
>
> > . d'une part, de concentrer les polluants non volatils et,
> > . d'autre part, préserver les polluants thermo-sensibles,
>
> - après condensation des vapeurs produites par le dispositif (2) de concentration par évaporation, on introduit les condensats (3) dans un dispositif (4) de séparation des gaz et/ou solvants où l'on sépare, à l'aide de vapeur, les gaz et/ou solvants contenus dans les condensats et
> - on incinère les dits gaz et/ou solvants.

**2.** Procédé selon la revendication 1 **caractérisé en ce que** le temps de séjour dans le dispositif de concentration est choisi entre dix et trente minutes.

**3.** Procédé selon la revendication 1 **caractérisé en ce qu'**on incinère les gaz et/ou solvants par combustion dans une chaudière.

**4.** Procédé selon la revendication 3 **caractérisé en ce qu'**on alimente la chaudière avec le gaz-carburant produit par les déchets de la décharge.

**5.** Procédé selon la revendication 1 **caractérisé en ce qu'**on incinère les gaz et/ou solvants par catalyse.

**6.** Procédé selon la revendication 1 **caractérisé en ce qu'**avant leur introduction dans le dispositif de concentration par évaporation, on réchauffe les lixiviats.

**7.** Moyens pour la mise en oeuvre du procédé selon l'une quelconque des revendications 1 à 6 **caractérisés en ce qu'**ils comprennent :

> - un dispositif (2) de concentration par évaporation choisi parmi les dispositifs de concentration par évaporation dit à flot tombant et les dispositifs d'évaporation du type à évaporation forcée, avec un cycle de traitement court compris entre cinq et cent minutes, à une température inférieure à 110°Celsius,

> - un dispositif (4) de séparation des gaz et/ou solvants au moyen de la vapeur et
> - un moyen d'incinération (5).

**8.** Moyens selon la revendication 7 **caractérisés en ce qu'**ils comprennent :

> - un moyen (6) de préchauffage des lixiviats avant introduction dans le dispositif de concentration par évaporation,
> - un dispositif (7) de condensation situé en amont du dispositif de séparation des gaz et/ou solvants.

## Claims

**1.** A method for treating leachates produced by storing waste containing mineral and organic material, applying a concentration step by evaporation, this method being
**characterized in that**:

> - the leachates (1) to be treated are introduced in a device (2) for concentrating them by evaporation in order to subject them to a concentration treatment by evaporation for a short time, between five and hundred minutes, at a temperature less than 110° Celsius, in order to:
> - concentrate the non-volatile pollutants on the one hand and,
> - preserve the heat-sensitive pollutants on the other hand,
> - after condensation of the vapors produced by device (2) for concentration by evaporation, the condensates (3) are introduced in a device (4) for separating gases and/or solvents wherein the gases and/or solvents contained in the condensates are separated by means of steam and,
> - said gases and/or solvents are incinerated.

**2.** The method according to claim 1, **characterized in that** the residence time in the concentration device is selected between ten and thirty minutes.

**3.** The method according to claim 1, **characterized in that** the gases and/or solvents are incinerated by combustion in a boiler.

**4.** The method according to claim 3, **characterized in that** the boiler is supplied with fuel gas produced by the waste of the dump.

**5.** The method according to claim 1, **characterized in that** the gases and/or solvents are incinerated by catalysis.

**6.** The method according 1, **characterized in that** the leachates are preheated before introducing them into the device for concentration by evaporation.

**7.** Means for applying the method according to any of claims 1 to 6, **characterized in that** they comprise:

- a device (2) for concentration by evaporation selected from the so-called falling film devices for concentration by evaporation and evaporation devices of the forced evaporation type, with a short treatment cycle between five and hundred minutes, at a temperature less than 110° Celsius,
- a device (4) for separating the gases and/or solvents by means of steam, and
- incineration means (5).

**8.** The means according to claim 7, **characterized in that** they comprise:

- means (6) for preheating the leachates before introducing them into the device for concentration by evaporation,
- a condensation device (7) located upstream from the device for separating gases and/or solvents.

**Patentansprüche**

**1.** Verfahren zur Behandlung der Sickerwässer, die durch Lagerung von Abfällen erzeugt werden und mineralische und organische Materialien enthalten, welches eine Konzentrationsstufe durch Verdampfen einsetzt, wobei das Verfahren **dadurch gekennzeichnet, daß**:

- die zu behandelnden Sickerwässer (1) in eine Vorrichtung (2) zur Konzentration durch Verdampfung eingeführt werden, um sie einer Konzentrationsbehandlung durch Verdampfung für eine kurze Zeit, zwischen 5 und 10 Minuten bei einer Temperatur unter 110°C zu unterziehen, um

-- einerseits die nichtflüchtigen Verschmutzungen zu konzentrieren und
-- andererseits die wärmeempfindlichen Verschmutzungen zu bewahren,

- nach Kondensieren der Dämpfe, die durch die Vorrichtung (2) zur Konzentration durch Verdampfung erzeugt sind, die Kondensate (3) in eine Vorrichtung (4) zur Trennung der Gase und/oder Lösungsmittel eingeführt werden, wo mit Hilfe von Dampf die Gase und/oder Lösungsmittel getrennt werden, die in den Kondensaten enthalten sind, und
- man die Gase und/oder Lösungsmittel verbrennt.

**2.** Verfahren nach Anspruch 1, **dadurch gekennzeichnet, daß** die Verweilzeit in der Konzentrationsvorrichtung zwischen 10 und 30 Minuten gewählt wird.

**3.** Verfahren nach Anspruch 1, **dadurch gekennzeichnet, daß** man die Gase und/oder Lösungsmittel durch Verbrennung in einem Erhitzer verbrennt.

**4.** Verfahren nach Anspruch 3, **dadurch gekennzeichnet, daß** man den Erhitzer mit Gasbrennstoff versorgt, der durch die Abfälle der Deponie erzeugt wird.

**5.** Verfahren nach Anspruch 1, **dadurch gekennzeichnet, daß** man die Gase und/oder Lösungsmittel durch Katalyse verbrennt.

**6.** Verfahren nach Anspruch 1, **dadurch gekennzeichnet, daß** man vor deren Einführung in die Vorrichtung zur Konzentration durch Verdampfung die Sickerwässer erwärmt.

**7.** Mittel zur Durchführung des Verfahrens nach einem der Ansprüche 1 bis 6, **dadurch gekennzeichnet, daß** sie umfassen:

- eine Vorrichtung (2) zur Konzentration durch Verdampfen, gewählt unter den sogenannten Vorrichtungen zur Konzentration durch Verdampfung mit Fallfilm und den Verdampfungsvorrichtungen des Typs mit getriebener Verdampfung, mit einem kurzen Behandlungszyklus zwischen 5 und 10 Minuten bei einer Temperatur unter 110°C,
- eine Vorrichtung (4) zur Trennung der Gase und/oder Lösungsmittel mittels Dampf und
- ein Verbrennungsmittel (5).

**8.** Mittel nach Anspruch 7, **dadurch gekennzeichnet, daß** sie umfassen:

- ein Mittel (6) zum Vorwärmen von Sickerwässern vor Einführung in die Vorrichtung zur Konzentration durch Verdampfung,
- eine Vorrichtung (7) zur Kondensation, die stromaufwärts der Trennvorrichtung der Gase und/oder Lösungsmittel angeordnet ist.

Fig. 1

EP 1 230 168 B1